# EUROPÄISCHE PATENTSCHRIFT

(11) **EP 0 603 693 B1**
(45) Veröffentlichungstag und Bekanntmachung des Hinweises auf die Patenterteilung: **13.11.1996**
(21) Anmeldenummer: 93120035.6
(22) Anmeldetag: 11.12.1993
(51) Int. Cl.: H05B 39/09, G09G 3/00

(54) **Schaltungsanordnung zur Beleuchtung einer Anzeige mittels Glühlampen**
Circuit for illuminating a display by means of incandescent lamps
Circuit pour éclairer un dispositif d'affichage au moyen de lampes incandescentes

(30) Priorität: 23.12.1992 DE 4243720
(43) Veröffentlichungstag der Anmeldung: 29.06.1994
(73) Patentinhaber: IR3 Video International GmbH, 90471 Nürnberg (DE)
(72) Erfinder: Wiekenberg, Günther, IR3 Video International GmbH, D-90471 Nürnberg (DE)

(56) Entgegenhaltungen:
- DE-A- 3 435 287
- DE-A- 3 635 148
- US-A- 4 063 234
- US-A- 4 680 536

## Beschreibung

Die Erfindung betrifft eine Schaltungsanordnung zur Beleuchtung einer Anzeige mittels Glühlampen mit den im Oberbegriff des Anspruchs 1 angegebenen Merkmalen.

In letzter Zeit werden immer häufiger Flüssigkristallanzeigen bei einer Vielzahl von Geräten, z.B. bei Videorekordern, verwendet, um den Benutzern dieser Geräte Informationen über den jeweiligen Gerätezustand zu geben, die beispielsweise für die Bedienung von Bedeutung sind. Da Flüssigkristallanzeigen optisch passiv sind (sie erzeugen selbst kein Licht), entsteht bei geringer Umfeldbeleuchtung die Notwendigkeit die Flüssigkristallanzeigen zu beleuchten.

Die Beleuchtung größerer Anzeigeflächen erfolgt oft mittels Leuchtfolien, bei denen die Lichtgewinnung auf dem Effekt der Elektroluminiszenz beruht. Der Nachteil dieser Leuchtfolien ist ihr hoher Preis und der schaltungstechnische Aufwand, der zur Erzeugung der hohen Betriebsspannung nötig ist.

Eine andere Möglichkeit zur Beleuchtung passiver Anzeigen stellt die Verwendung von Leuchtdioden dar. Da Leuchtdioden nur eine geringe Lichtausbeute aufweisen, sind zur gleichmäßigen Beleuchtung größerer Anzeigeflächen viele Leuchtdioden nötig, so daß sich aus dem Montageaufwand ein hoher Preis für eine derartige Anzeigenbeleuchtung ergibt.

Eine weitere Möglichkeit passive Anzeigen zu beleuchten ist die Verwendung von Glühlampen. Zur Erhöhung der Lebensdauer der Glühlampen werden diese mit Wechselspannung betrieben.

Aus der deutschen Offenlegungsschrift DE 36 35 148 A1 ist eine Steuereinheit für Glühlampen bekannt, mit der es möglich ist, die Helligkeit der mit einer Impulsfolge (rechteckförmige Wechselspannung) betriebenen Glühlampen dadurch zu regeln, daß die Impulsbreite bei gleichbleibender Impulsfrequenz variiert wird.

Glühlampen haben aber den Nachteil, daß bereits geringe Schwankungen der Versorgungsspannung zu einer deutlich wahrnehmbaren Veränderung der Helligkeit führen. Daher ist eine Regelung der Versorgungsspannung nötig. Der Regelungsaufwand und die dadurch hervorgehobenen Verluste werden noch größer, wenn zusätzlich eine Einstellung der Helligkeit der Glühlampen möglich sein soll.

Aufgabe der vorliegenden Erfindung ist es deshalb, eine Schaltungsanordnung zur Beleuchtung einer Anzeige mittels Glühlampen anzugeben, die bei geringem Schaltungsaufwand eine verlustarme Stabilisierung und Einstellung der Helligkeit erlaubt.

Erfindungsgemäß wird diese Aufgabe bei einer Schaltungsanordnung mit den im Oberbegriff des Anspruchs 1 angegebenen Merkmalen durch die im kennzeichnenden Teil des Anspruchs 1 angegebenen Merkmale gelöst. Vorteilhafte Weiterbildungen der Erfindung ergeben sich aus den abhängigen Patentansprüchen.

Die Vorteile der Erfindung bestehen insbesondere darin, daß die Schaltungsanordnung eine variable Einstellung und Stabilisierung der Helligkeit der angeschlossenen Glühlampen bei geringer Verlustleistung und geringem Schaltungsaufwand gestattet.

Weitere Vorteile der Erfindung ergeben sich aus der Erläuterung eines Ausführungsbeispiels anhand von Figuren.

Es zeigt:
Figur 1 das Schaltbild eines Ausführungsbeispiels der erfindungsgemäßen Schaltungsanordnung,
Figur 2a eine Weiterbildung der Schaltungsanordnung nach Figur 1 zur Anpassung der Schaltungsanordnung an ein Schaltnetzteil,
Figur 2b eine mögliche Realisierung der in der Schaltungsanordnung nach Figur 1 verwendeten Einrichtungen S1 und S2 zur Erzeugung einer Sägezahnspannung,
Figur 3 Signalverläufe, die in der Schaltungsanordnung nach Figur 1 bei maximal eingestellter Helligkeit auftreten, und
Figur 4 Signalverläufe, die in der Schaltungsanordnung nach Figur 1 bei verringerter Helligkeit auftreten.

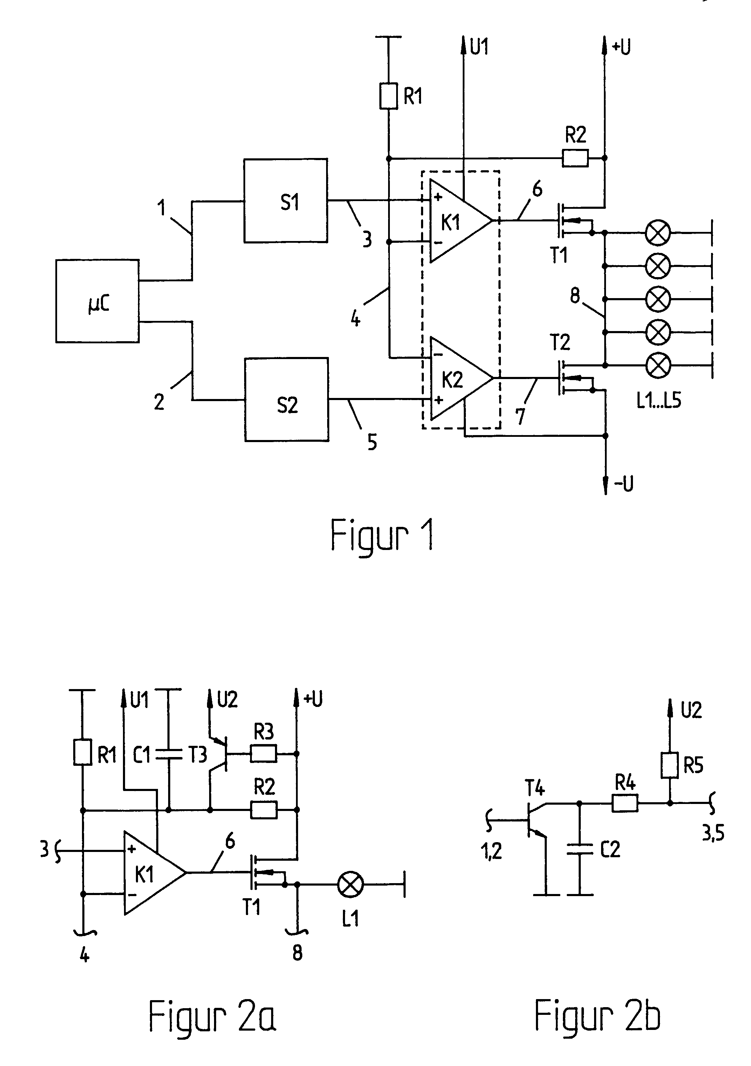

Die Schaltungsanordnung nach Figur 1 weist einen Mikrocomputer µC zur Erzeugung von Rechtecksignalen, zwei Einrichtungen S1 und S2 zur Erzeugung von Sägezahnspannungen, zwei Komparatoren K1 und K2, zwei Widerstände R1 und R2, zwei n-Kanal-Feldeffekttransistoren T1 und T2 sowie fünf Glühlampen L1...L5 auf. Die Betriebsspannungen U1, +U und -U stammen im vorliegenden Ausführungsbeispiel von einem Schaltnetzteil.

Der Mikrocomputer µC erzeugt zwei Rechtecksignale 1 und 2, deren Frequenzen und Tastverhältnisse veränderbar sind. Die Signale 1 und 2 liegen an den Eingängen der Einrichtungen S1 und S2, welche aus den Rechtecksignalen 1 und 2 sägezahnförmige Signale 3 und 5 erzeugen. Die Signale 3 und 5 steuern die nichtinvertierenden Eingänge der Komparatoren K1 und K2 an. An den invertierenden Eingängen der Komparatoren K1 und K2 liegt ein Signal 4 an, das mittels des aus den Widerständen R1 und R2 gebildeten Spannungsteilers von der Betriebsspannung +U abgeleitet wird. Die Komparatoren K1 und K2 steuern die Transistoren T1 und T2 an, welche die Betriebsspannungen +U und -U auf die Glühlampen L1...L5 schalten.

Durch die Versorgung der Komparatoren K1 und K2 mit den Spannungen -U und U1 wird erreicht, daß die Transistoren T1 und T2 voll ein- bzw. ausgeschaltet werden können, da die Spannung U1 höher als die zu schaltende Spannung +U ist. Dadurch wird ein niedriger Einschaltwiderstand für die Transistoren T1 und T2 erreicht, woraus sich eine geringe Verlustleistung ergibt, die um eine Größenordnung unter der Verlustleitung liegt, wie sie bei einer linearen Regelung entstehen würde.

Zur Erzielung des gewünschten Stabilisierungseffekts ist es ausreichend die Spannungsänderungen eines Zweiges der Spannungsversorgung der Glühlampen L1...L5 für die Regelung auszuwerten, da durch die Trafoverkopplung im für die Betriebsspannungsversorgung verwendeten Schaltnetzteil die Änderungen von +U und -U sowohl betrags- als auch richtungsmäßig gleich sind.

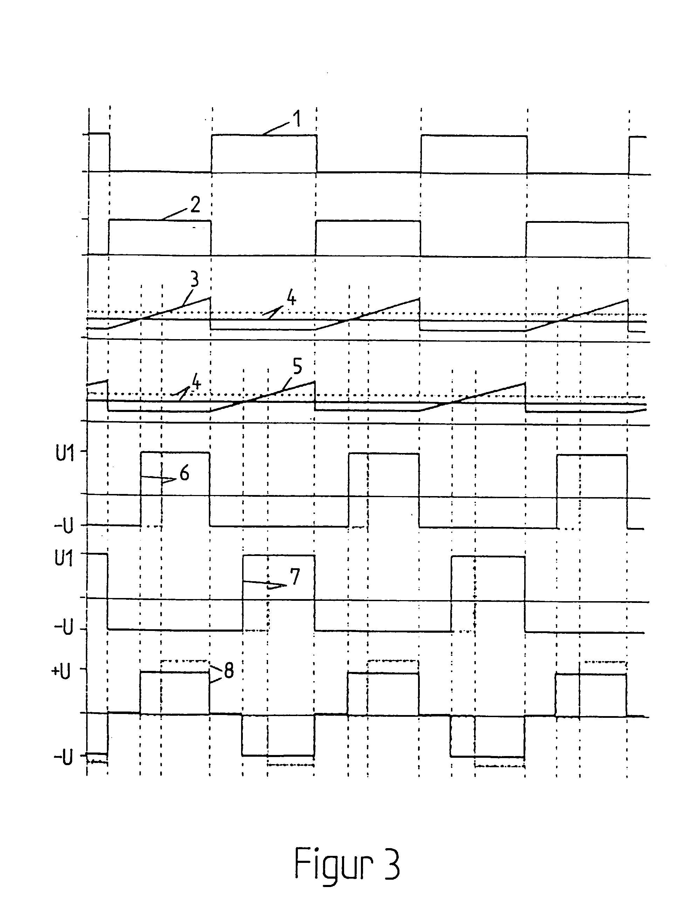

Die Arbeitsweise der erfindungsgemäßen Schaltungsanordnung wird nachfolgend anhand der in Figur 3 dargestellten Signalverläufe für die maximale Helligkeit erläutert. Das Tastverhältnis der vom Mikrocomputer µC gelieferten Rechtecksignale 1 und 2 beträgt für diesen Fall 50 %.

Im folgenden werden zuerst die in Form von durchgezogenen Linien dargestellten Signalverläufe der Figur 3 betrachtet. Sie zeigen die Arbeitsweise der Schaltungsanordnung für den Fall, daß eine Stabilisierung der Helligkeit nicht notwendig ist, d.h. die Schaltung wird in der Ruhelage beschrieben.

Die Rechtecksignale 1 und 2 werden durch S1 und S2 in die sägezahnförmigen Signale 3 und 5 umgeformt. Figur 2b zeigt eine mögliche Ausführung der Einrichtungen S1 und S2 mit einem Transistor T4, einem Kondensator C2, zwei Widerständen R4 und R5 und einer Spannung U2. Die Spannung U2 stammt wie die anderen Betriebsspannungen von einem Schaltnetzteil und ist eine stabilisierte Spannung. Die Rechtecksignale steuern die Basis des Transistors T4, der bei niedrigem Pegel der Rechtecksignale gesperrt ist. Der Kondensator C2 wird von der Spannung U2 über die Widerstände R4 und R5 geladen. Bei hohem Pegel der Rechtecksignale wird die Kollektor-Emitter-Strecke des Transistors T4 leitend und der Kondensator C2 wird entladen. Die sägezahnförmigen Signale 3 und 5 steuern die nichtinvertierenden Eingänge der Komparatoren K1 und K2 an. An den invertierenden Eingängen liegt das Signal 4, das durch den Spannungsteiler R1, R2 von der Betriebsspannung +U abgeleitet wird. An den Ausgängen der Komparatoren K1 und K2 liegen die zeitversetzten Ansteuersignale 6 und 7 für die Transistoren T1 und T2. Ihr Tastverhältnis ist abhängig von der Lage des Signals 4 zu dem sägezahnförmigen Signalen 3 und 5. Die an den Glühlampen anliegende Spannung wird durch das Signal 8 wiedergegeben. Durch Verändern der Lage des Signals 4 zu den sägezahnförmigen Signalen 3 und 5 mittels des Spannungsteilers R1, R2 kann der Effektivwert der an den Glühlampen L1...L5 anliegenden Spannung 8 festgelegt werden.

Zur Erzeugung der sägezahnförmigen Signale 3 und 5 ist die Zeitkonstante aus C2, R4, R5 so zu wählen, daß sich ein annähernd linearer Verlauf ergibt, während die Steilheit der Ladekurve so festzulegen ist, daß die Impulsbreite der Signale 6 und 7 am Ausgang der Komparatoren K1 und K2 mit dem Quadrat der Änderung der Spannung +U so variiert, daß die Impulsbreite mit steigender Spannung +U abninmmt, da die Leistung an den Lampen L1...L5 während der Einschaltzeit konstant gehalten werden muß.

Schwankungen der Spannung +U bewirken somit keine Helligkeitsänderungen der Glühlampen L1...L5. Dies kann den in Figur 3 gepunktet dargestellten Signalverläufen entnommen werden. Bei einer Erhöhung der Spannung +U erhöht sich auch die Spannung des Signals 4 und seine Lage zu den sägezahnförmigen Signalen 3 und 5 verschiebt sich. Dadurch wird die Impulsbreite der Signale 6 und 7 verringert, was zu einer entsprechenden Verringerung der Impulsbreite des Signals 8 an den Glühlampen L1...L5 führt, wodurch die Stabilisierung der Helligkeit erreicht wird. Bei einer Verringerung der Spannung +U werden die Impulsbreiten der Signale 6,7 und 8 zur Stabilisierung der Helligkeit entsprechend vergrößert.

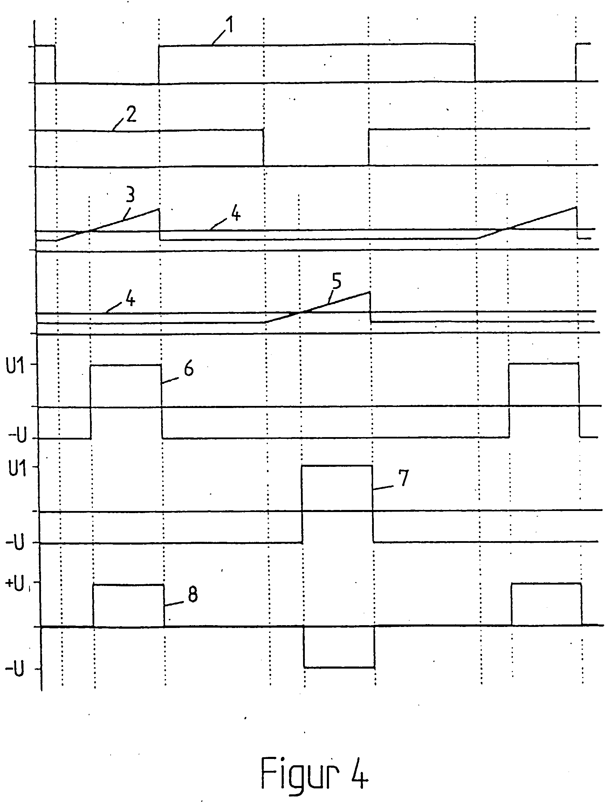

Soll die Helligkeit von Glühlampen beliebig einstellbar sein, so wird normalerweise, ausgehend vom Maximalwert, die Einschaltzeit der Glühlampen verringert. Diese Verringerung der Einschaltzeit wird durch Veränderung des Tastverhältnisses der Rechteckspannungen des Mikrocomputers erreicht. Daraus ergibt sich aber das Problem, daß die Steilheit der Ladekurve bei jeder Helligkeitsänderung angepaßt werden müßte, um die Stabilisierungswirkung der Schaltungsanordnung beizubehalten. Dies kann vermieden werden, wenn, wie in Figur 4 zum Vergleich zu Figur 3 dargestellt, zur Änderung der Helligkeit der Glühlampen L1...L5 die Frequenz und das Tastverhältnis der Rechtecksignale 1 und 2 so verändert werden, daß die Einschaltzeit der Glühlampen L1...L5 konstant bleibt. Die Änderung der Helligkeit erfolgt dann durch das Variieren des zeitlichen Abstands zwischen der Ansteuerung des positiven +U und negativen -U Zweiges der Versorgungsspannung der Glühlampen L1...L5. Dadurch muß bei Schwankungen der Versorgungsspannung +U, -U immer nur die gleiche Leistungsfläche ausgeglichen werden, eine Änderung der Ladekurve ist nicht nötig. Neben der Änderung des zeitlichen Abstands zwischen jeder Ansteuerung des positiven +U und negativen Zweiges der Versorgungsspannung ist es auch möglich, den zeitlichen Abstand beispielsweise nur nach jeder zweiten Ansteuerung der Glühlampen L1...L5 zu verändern. Eine Helligkeitsregelung ist dann auch ohne die variable Veränderbarkeit des zeitlichen Abstands zwischen den Ansteuerungen möglich, wenn je nach der gewünschten Helligkeit ein gleichbleibender zeitlicher Abstand nach jeder, nach jeder zweiten, nach jeder dritten, ... Ansteuerung der Glühlampen L1...L5 eingefügt wird. Die beiden Möglichkeiten zur Veränderung des zeitlichen Abstands zwischen der Ansteuerung der Glühlampen L1...L5 können auch kombiniert werden.

Neben der beschriebenen Ausführungsform sind vielfältige andere Ausführungsformen möglich. Beispielsweise kann auf den Transistor T4 in Figur 2b verzichtet werden, wenn der verwendete Mikrocomputer µC genügend Strom sinken kann. Auch auf den Widerstand R4 kann verzichtet werden, wenn der Betrag der Spannungen +U, -U groß genug ist. In der dargestellten Ausführungsform dient R4 dazu, den niedrigen Pegel der sägezahnförmigen Signale 3 bzw. 5 so nahe wie möglich an das Signal 4 zu führen, um bei voller Helligkeit ein möglichst breites Tastverhältnis am Ausgang der Komparatoren zu erreichen.

Eine weitere Ausführungsform stellt Figur 2a dar. Sie ist ein Ausschnitt der Schaltungsanordnung nach Figur 1. Die Schaltungsanordnung ist um einen Kondensator C1, einen Transistor T3 und einen Widerstand R3 erweitert. Am Emitter des Transistors T3 liegt die Spannung U2 an. Die Spannung U2 wird von einer Wicklung des Schaltnetzteils geliefert, die im Vergleich zur Spannung +U eine wesentlich kleinere Ladekapazität hat. Nach dem Anlegen der Versorgungsspannung an das Schaltnetzteil steht deshalb die Spannung U2 als erste zur Verfügung. Über den Transistor T3 liegt die Spannung U2 solange an den invertierenden Eingängen der Komparatoren K1 und K2, bis +U größer als U2 ist. Der Transistor T3 wird dann durch +U gesperrt, und die Komparatorspannung 4 läuft mit einer Zeitkonstante, die sich aus den Werten des Kondensators C3 und den Werten der Widerstände R1 und R2 ergibt, in den Arbeitspunkt. Die Ausgangssignale der Komparatoren K1 und K2 beginnen also mit dem schmalsten Tastverhältnis, d.h., die Glühlampen L1...L5 werden langsam auf die eingestellte Helligkeit geregelt.

Weitere Ausführungsformen ergeben sich, wenn bei entsprechender Abänderung der Ansteuerschaltung statt zweier n-Kanal-Feldeffekttransistoren ein n- und ein p-Kanal-Feldeffekttransistor verwendet werden.

## Patentansprüche

1. Schaltungsanordnung zur Beleuchtung einer Anzeige mittels Glühlampen, mit
einer nicht stabilisierten Spannungsversorgung, die zwei Betriebsspannungen mit positiver (+U) und negativer (-U) Polarität zur Verfügung stellt,
einer Einrichtung (µC,T1,T2), welche die positive (+U) und negative (-U) Betriebsspannung wechselweise für eine gleiche Zeitdauer mittels Schaltern (T1,T2) an den Glühlampen (L1...L5) einschaltet und zur variablen Einstellung der Helligkeit der Glühlampen (L1...L5) Mittel (µC) aufweist, welche die Schalter (T1,T2) so ansteuern, daß sich die Ein- und Ausschaltzeitdaueren der beiden Betriebsspannungen verändern,
**dadurch gekennzeichnet**,
daß die Mittel (µC) zur Einstellung der Helligkeit die Veränderung der Ein- und Ausschaltzeitdauern durch alleiniges Verändern der Ausschaltzeitdauer bewirken, und daß eine Einrichtung (S1,S2,K1,K2,R1,R2) zur Stabilisierung der eingestellten Helligkeit vorgesehen ist, welche auftretende Schwankungen der Betriebsspannungen (+U,-U) dadurch ausgleicht, daß die Einschaltzeitdauern der Glühlampen (L1...L5) umgekehrt proportional zum Quadrat der Spannungsschwankung verändert werden.

2. Schaltungsanordnung nach Anspruch 1,
**dadurch gekennzeichnet**,
daß die Mittel (µC) Rechteckspannungen erzeugen und von einem Mikrocomputer gebildet werden.

3. Schaltungsanordnung nach Anspruch 1 oder 2,
**dadurch gekennzeichnet**,
daß die Schalter (T1,T2) von n-Kanal-Feldeffekttransistoren gebildet werden.

4. Schaltungsanordnung nach einem der Ansprüche 1 bis 3,
**dadurch gekennzeichnet**,
daß die Einrichtung (S1,S2,K1,K2,R1,R2) zur Stabilisierung der Helligkeit Mittel (S1,S2) zur Erzeugung sägezahnförmiger Spannungen (3,5), zwei Widerstände (R1,R2) und zwei Komparatoren (K1,K2) aufweist, wobei die Widerstände (R1,R2) als Spannungsteiler angeordnet sind, der an der positiven Betriebsspannung (+U) und an Masse angeschlossen ist, der Ausgang des Spannungsteilers an den invertierenden Eingängen der Komparatoren (K1,K2) anliegt und die sägezahnförmigen Spannungen (3,5) an den nichtinvertierenden Eingängen.

## Claims

1. Circuit arrangement for illuminating a display by means of filament lamps, comprising
an unstabilized voltage supply which provides two operating voltages having positive (+U) and negative (-U) polarity, a device (µC, T1, T2) which alternately switches on the positive (+U) and negative (-U) operating voltage across the filament lamps (L1 ... L5) for an equal time duration by means of switches (T1, T2) and has means (µC) for the variable adjustment of the brightness of the filament lamps (L1 ... L5), which means trigger the switches (T1, T2) in such a way that the switch-on and switch-off time durations of the two operating voltages vary,
characterized in that the means (µC) for adjusting the brightness effect the variation in the switch-on and switch-off time durations by solely varying the switch-off time duration and in that a device (S1, S2, K1, K2, R1, R2) is provided for stabilizing the adjusted brightness, which device smooths out fluctuations occurring in the operating voltages (+U, -U) as a result of the switch-on time durations of the filament lamps (L1 ... L5) being varied in inverse proportion to the square of the voltage fluctuation.

2. Circuit arrangement according to Claim 1,
characterized in that the means (µC) generate square-wave voltages and are formed by a microcomputer.

3. Circuit arrangement according to Claim 1 or 2, characterized in that the switches (T1, T2) are formed by n-channel field-effect transistors.

4. Circuit arrangement according to one of Claims 1 to 3, characterized in that the device (S1, S2, K1, K2, R1, R2) for stabilizing the brightness has means (S1, S2) for generating sawtooth-type voltages (3, 5), two resistors (R1, R2) and two comparators (K1, K2), the resistors (R1, R2) being arranged as a voltage divider which is connected to the positive operating voltage (+U) and to earth, the output of the voltage divider being applied to the inverting inputs of the comparators (K1, K2) and the sawtooth-type voltages (3, 5) being applied to the noninverting inputs.

## Revendications

1. Montage pour éclairer un dispositif d'affichage à l'aide de lampes à incandescence, comportant une alimentation en tension non stabilisée, qui délivre deux tensions de fonctionnement possédant une polarité positive (+U) et une polarité négative (-U),
un dispositif (mC,T2,T2), qui applique la tension d'alimentation positive (+U) et la tension d'alimentation négative (-U) alternativement pendant une durée identique, à l'aide d'interrupteurs (T1,T2), aux lampes à incandescence (L1...L5) et possède pour le réglage variable de la luminosité des lampes à incandescence (L1...L5), des moyens (mC), qui commandent les interrupteurs (T1,T2) de telle sorte que les durées d'application et d'interruption des deux tensions de fonctionnement varient,
caractérisé en ce que les moyens (mC) pour le réglage de la luminosité provoquent la modification des durées d'application et d'interruption en modifiant uniquement la durée d'interruption, et qu'il est prévu un dispositif (S1,S2,K1,K2,R1,R2) puor stabiliser la luminosité réglée, qui compense des variations, qui se produisent, des tensions de fonctionnement (+U,-U) par le fait que les durées de branchement des lampes à incandescence (L1...L5) sont modifiées d'une manière inversement proportionnelle au carré de la variation de tension.

2. Montage selon la revendication 1, caractérisé en ce que les moyens (mC) produisent des tensions rectangulaires et sont formés par un micro-ordinateur.

3. Montage selon la revendication 1 ou 2, caractérisé en ce que les interrupteurs (T1,T2) sont formés par des transistors à effet de champ à canal n.

4. Montage selon l'une des revendications 1 à 3, caractérisé en ce que le dispositif (S1,S2,K1,K2,R1,R2) servant à stabiliser la luminosité possède des moyens (S1,S2) pour produire des tensions en dents de scie (3,5), deux résistances (R1,R2) et deux comparateurs (K1,K2), les résistances (R1,R2) étant disposées en tant que diviseur de tension, qui est raccordé à la tension de fonctionnement positive (+U) et à la masse et qui raccorde la sortie du diviseur de tension aux entrées inverseuse des comparateurs (K1,K2) et applique les tensions en dents de scie (3,5) aux entrées non inverseuses.
